(19) Europäisches Patentamt
European Patent Office
Office européen des brevets

(11) EP 4 755 748 A1

(12) EUROPEAN PATENT APPLICATION

(43) Date of publication:
10.06.2026 Bulletin 2026/24

(21) Application number: 25218940.2

(22) Date of filing: 27.11.2025

(51) International Patent Classification (IPC):
B61L 15/00 (2006.01)    B61L 23/04 (2006.01)
B61L 27/53 (2022.01)

(52) Cooperative Patent Classification (CPC):
B61L 23/042; B61L 15/0081; B61L 23/045;
B61L 23/047; B61L 27/53

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 03.12.2024 SE 2451227

(71) Applicant: Redemptor Specialsystem AB
442 34 Kungälv (SE)

(72) Inventors:
• Hogmalm, Kristoffer
442 91 Romelanda (SE)
• Häggman, Evert
412 76 Göteborg (SE)
• Johansson, Simon
421 38 Västra Frölunda (SE)
• Salem, Amr
436 36 Askim (SE)

(74) Representative: Ström & Gulliksson AB
P.O. Box 4188
203 13 Malmö (SE)

(54) **METHOD, BACKEND CLOUD SERVICE, TRACK-BOUND APPARATUS AND COMPUTERIZED SYSTEM FOR RAILWAY NETWORK ASSESSMENT**

(57)    A method (100) implemented by a backend cloud service (200) for assessing a track portion (12) in a railway network (10) is provided. The method comprises: obtaining (110) a plurality of railway measurement sets from a track-bound apparatus (20), the track-bound apparatus (20) comprising a plurality of sensors (22) and a mechanical interface (25) to a track-bound vehicle (30) adapted to traverse the track portion (12), wherein each railway measurement set comprises a mapping between a sensing location in the railway network (10) and railway measurements of the track portion (12) sensed by the sensors (22) at said sensing location during a traversal by the track-bound vehicle (30); processing (120) the railway measurement sets to generate a track profile of the track portion (12); and generating (130) a report on the track profile indicating the presence of one or more track faults along the track portion (12).

FIG. 2

## Description

### TECHNICAL FIELD

The present invention generally relates to railway network assessment. More particularly, the present invention relates to a method for assessing a track portion in a railway network. The present invention also relates to an associated backend cloud service, track-bound apparatus, and computerized system.

### BACKGROUND

The assessment of railway networks is crucial for ensuring the safety, reliability, and efficiency of rail transportation. Regular and accurate monitoring of railway tracks is necessary to identify and address faults or wear that could lead to accidents, service interruptions, or costly repairs. Given the essential role of railway infrastructure in both passenger and freight transport, effective track condition assessment methods are indispensable.

Traditional methods often employ large, specialized trains equipped with advanced supercomputers and a significant array of sensors. These trains traverse extensive sections of the railway network at high speeds, collecting data to detect irregularities and potential faults. While these methods have been somewhat effective, they come with drawbacks.

One limitation is the high cost associated with these specialized trains and supercomputers, which are expensive both in terms of initial investment and ongoing maintenance. The operational costs and specialized technical competencies of running and maintaining these complex systems can be prohibitively high for many railway operators. Moreover, the sheer weight of these large trains can wear down the tracks, adding to the maintenance burden. It is also a hassle to prepare the tracks for assessments using these type of trains because scheduling of the assessment typically needs to be performed many months beforehand.

It is in light of the observations above and others that the present inventor is herein suggesting one or more improvements to the prior art of railway network assessment.

### SUMMARY

The present inventor has made valuable technical insights to solve or at least mitigate one or more of the challenges referred to in the background section. These insights will be presented as inventive aspects in the detailed description section and the drawings. The list of inventive aspects is not to be seen as exhaustive but rather a summary of particularly beneficial inventive aspects. Generally, all terms used herein are to be interpreted according to their ordinary meaning in the technical field, unless explicitly defined otherwise herein.

In a first aspect of this disclosure, there is provided a method implemented by a backend cloud service for assessing a track portion in a railway network. The method comprises obtaining a plurality of railway measurement sets from a track-bound apparatus, the track-bound apparatus comprising a plurality of sensors and a mechanical interface to a track-bound vehicle adapted to traverse the track portion, wherein each railway measurement set comprises a mapping between a sensing location in the railway network and railway measurements of the track portion sensed by the sensors at said sensing location during a traversal by the track-bound vehicle; processing the railway measurement sets to generate a track profile of the track portion; and generating a report on the track profile indicating the presence of one or more track faults along the track portion.

The first aspect of the disclosure may seek to reduce the complexity and cost associated with railway track assessments. A technical benefit may include enhancing efficiency and flexibility in railway track assessments by allowing the track-bound apparatus to be easily transported and quickly set up, reducing the need for lengthy scheduling processes, as well as reducing costs and wear-related issues on tracks.

In some examples, the method further comprises obtaining a reference profile comprising nominal baseline values of railway measurements of the track portion at reference locations corresponding to the sensing locations where the sensors sensed the railway measurements of the track portion, wherein the generating comprising comparing the track profile to the reference profile, wherein the presence of one or more track faults is conditioned by one or more discrepancies between the track profile and the reference profile. A technical benefit may include enhancing the accuracy of track fault detection by comparing actual measurements to established baseline values.

In some examples, the report comprises a maintenance prioritization indicator for track faults present along the track portion. A technical benefit may include providing a prioritized list of maintenance actions based on the severity of detected track faults.

In some examples, larger deviations between values of the track profile and values of the reference profile are prioritized higher compared to lower deviations between values of the track profile and values of the reference profile. A technical benefit may include ensuring that more severe track faults are addressed first, thereby enhancing railway safety.

In some examples, the processing of the railway measurement sets comprises: identifying from the railway measurements one or more clusters of vertical and horizontal positions of a rail head of the track portion at each sensing location; and filtering the one or more identified clusters to extract a virtual representation of the rail head. A technical benefit may include improving the precision of track condition assessments by isolating and analyzing specific clusters of measurement data.

In some examples, the method further comprises, based on the virtual representation of the rail head, calculating a track width based on the vertical positions of the rail head and a calibration distance between a sensor for a left rail part of the track portion and a sensor for a right rail part of the track portion. A technical benefit may include accurately determining the track width to ensure proper gauge and track alignment.

In some examples, the method further comprises, based on the virtual representation of the rail head, calculating a cross level $C$ as

$$C = \sin(\alpha) * G,$$

where $\alpha$ represents an angle at which respective rail parts of the track portion are tilted relative to the horizontal plane, and $G$ represents the gauge of the track portion being the distance between inner faces of the respective rails. A technical benefit may include providing precise measurements of track tilt to ensure safe train operations.

In some examples, the method further comprises calculating a skew angle of the track portion as a derivative of the cross level. A technical benefit may include detecting torsional stresses in the track that could lead to structural issues.

In some examples, the method further comprises, based on the virtual representation of the rail head, calculating a longitudinal level $L$ as:

$$dy = h + \sin(\beta)d - m,$$

$$\alpha = \tan^{-1}\left(\frac{(h + \sin(\beta)d) - m}{d}\right),$$

$$\delta y = dx \sin(\alpha),$$

$$L = \int \delta y dx,$$

where $h$ is a height from the ground to an arm holding a sensor, $d$ is the length of the arm, $dx$ is the step between each railway measurement, $\beta$ is an angle of a body of the track-bound apparatus in relation to the longitudinal direction of respective rail parts of the track portion, and $m$ the railway measurement obtained by the sensor. A technical benefit may include creating a detailed elevation profile of the track to identify vertical irregularities.

In some examples, the method further comprises, based on the virtual representation of the rail head, calculating a rail alignment $R$ as:

$$dy = L_1 + \sin(\beta)d/2 - (L_2 + \sin(\beta)d/2),$$

$$\alpha = \tan^{-1}\left(\frac{dy}{d}\right),$$

$$\delta y = \alpha \, dx,$$

$$R = \int \delta y \, dx,$$

where $d$ is the length of an arm holding a sensor, $dx$ is the step between each railway measurement, $\beta$ is an angle of a body of the track-bound apparatus in relation to the longitudinal direction of respective rails of the track portion, and $L_1$, $L_2$ represent vertical positions of a first scanner arranged at a first measurement axle, and of a second scanner arranged at a second measurement axle, different from the first measurement axle, respectively, of the track-bound apparatus. A technical benefit may include providing a comprehensive horizontal alignment profile to detect and correct misalignments in the track.

In some examples, each railway measurement set further comprises a speed class of the track-bound vehicle, the speed class determining a travelling speed of the track-bound vehicle and a sampling rate of the sensors. A technical benefit may include optimizing data collection by adjusting the sampling rate based on the vehicle's speed.

In some examples, the track-bound apparatus further comprises a data collection device serving as an intermittent device for collecting the railway measurement sets provided by the sensors, the obtaining comprising: configuring a function-as-a-service to read a queue from a data storage to which the data collection device pushes the collected railway measurement sets; and unpackaging the railway measurement sets read from said data storage; merging the unpackaged railway measurement sets into a consolidated dataset using the function-as-a-service, the merging involving processing of the railway measurement sets to reconcile discrepancies and align data points based on predefined criteria; and storing the merged dataset in a persistent storage system, wherein the generation of the report is further based on the merged dataset. A technical benefit may include improving data accuracy and consistency by consolidating and reconciling measurement sets before analysis.

In some examples, the sensors comprise one or more of an encoder, laser scanner, inclinometer, IMU, and GPS. A technical benefit may include enhancing the versatility and precision of track assessments by utilizing a variety of sensor types.

In a second aspect of this disclosure, there is provided a backend cloud service comprising processing circuitry configured to carry out the steps of the method according to the first aspect.

In a third aspect of this disclosure, there is provided a track-bound apparatus. The apparatus comprises a mechanical interface to a track-bound vehicle adapted to traverse a track portion in a railway network; and a plurality of sensors configured to sense the track portion during a traversal by the track-bound vehicle, wherein the track-bound apparatus is in communicative connection with the backend cloud service of the second aspect.

In a fourth aspect of this disclosure, there is provided a railway assessment system comprising the backend cloud service of the second aspect and the track-bound apparatus of the third aspect.

Similar problem that was targeted in the first aspect and the associated advantages provided can be envisaged also with respect to the second, third, and/or fourth aspects of this disclosure.

Other aspects, objectives, features and advantages of the inventive aspects will appear from the following detailed disclosure as well as from the claims and the drawings. Generally, all terms used herein are to be interpreted according to their ordinary meaning in the technical field, unless explicitly defined otherwise herein.

It should be emphasized that the term "comprises/comprising" when used in this specification is taken to specify the presence of stated features, integers, steps, or components, but does not preclude the presence or addition of one or more other features, integers, steps, components, or groups thereof. All terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

Expressions like "[something] is configured for... [performing activity]" or "[something] is configured to ... [perform activity]" will include typical cases where a computerized "something" (having one or more controllers, processing units, programmable circuitry, etc.) executes software or firmware installed in the computerized "something", wherein the execution occurs in order to perform the activity in question.

## BRIEF DESCRIPTION OF THE DRAWINGS

The foregoing will be apparent from the following more particular description of the example embodiments, as illustrated in the accompanying drawings. The drawings are not necessarily to scale, emphasis instead being placed upon illustrating the example embodiments.

FIG. 1 is an exemplary perspective view illustration of a track-bound apparatus and a track-bound vehicle operating in a railway network according to one example.

FIG. 2 is an exemplary perspective view of a track-bound apparatus and a backend cloud service according to one example.

FIG. 3 is an exemplary block diagram of software components of a backend cloud service according to one example.

FIG. 4 is an exemplary block diagram of an exemplary step function implementable by a backend cloud service according to one example.

FIG. 5 is an exemplary illustration of a graphical user interface showing a report that is accessible by a user of a smart device according to one example.

FIG. 6 is an exemplary illustration of how a track width can be calculated using exemplary methods of this disclosure.

FIG. 7 is an exemplary illustration of how a cross level and skew angle can be calculated using exemplary methods of this disclosure.

FIG. 8 is an exemplary illustration of how a longitudinal level can be calculated using exemplary methods of this disclosure.

FIG. 9 is an exemplary illustration of how a rail alignment can be calculated using exemplary methods of this disclosure.

FIG. 10 shows a flowchart of a computer-implemented method according to one example.

FIG. 11 shows a block view of an exemplary computerized system that can include computerized components according to one example.

FIG. 12 is a non-transitory computer-readable storage medium according to one example.

## DETAILED DESCRIPTION OF EMBODIMENTS

Inventive aspects and embodiments of the invention will now be described with reference to the accompanying drawings. The invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the particular embodiments illustrated in the accompanying drawings is not intended to be limiting of the invention. In the drawings, like reference signs refer to like elements.

This disclosure addresses the limitations present in traditional approaches of railway network assessment, such as high costs, safety concerns, complex scheduling, track wear caused by heavy assessment trains, and reliance on expensive computing equipment. The proposed approach leverages a backend cloud service to provide a more efficient, cost-effective, and safer solution for evaluating railway tracks.

The approach involves a backend cloud service that performs the assessment of a track portion in a railway network. The approach begins with data collection using a track-bound apparatus equipped with multiple sensors and a mechanical interface that allows it to be mounted on a track-bound vehicle. As the track-bound vehicle traverses the track portion, the sensors continuously collect railway measurement sets. These sets include mappings between specific sensing locations in the railway network and the physical measurements of the track at those locations. The collected railway measurement sets are then processed to generate a track profile for evaluating the track's condition. The approach culminates in generating a comprehensive report based on the processed track profile. This report identifies the presence of one or more track faults, providing actionable insights for maintenance and repairs.

By utilizing a backend cloud service for data processing and storage, the approach reduces the need for expensive on-site computing equipment, leading to cost savings in both initial investment and ongoing maintenance. By processing data in the cloud, the approach enables quicker turnaround times for generating track profiles and reports, ensuring that potential faults are identified and addressed promptly, which reduces the risk of accidents and service interruptions. The lighter track-bound apparatus exerts less pressure on the tracks compared to heavier assessment trains, thereby reducing track wear and prolonging the lifespan of the railway infrastructure. The cloud-based approach also allows for easy scalability, enabling additional assessment capabilities to be integrated without significant changes to the existing infrastructure as railway networks expand or new sections are added. Furthermore, railway operators can access the assessment data and reports remotely through the cloud service, facilitating centralized monitoring and decision-making based on the most recent and comprehensive data available.

In comparison to prior art solutions, which rely on large, specialized trains and supercomputers, this reliance on a backend cloud service and a smaller, more agile track-bound apparatus offers several advantages. It eliminates the need for specialized trains and supercomputers, reducing both capital and operational expenditures. With this solution, it can allow a project leader or other staff to easily transport the track-bound apparatus in e.g. the trunk of a car to a location where a track assessment is to be carried out, and quickly set up the assessment system. Consequently, there is no need for lengthy scheduling processes long before the assessment (e.g. several months are potentially saved in planning time), as this apparatus can be rapidly deployed and is easily transportable between track portions, unlike specialized trains. This agility can enhance efficiency and flexibility in railway track assessments. In addition, cloud-based processing ensures faster data analysis and report generation, facilitating prompt maintenance actions. Yet additionally, the lightweight apparatus reduces the wear and tear on the tracks, leading to a longer infrastructure lifespan and fewer maintenance requirements.

In conclusion, this disclosure offers a more efficient, cost-effective, and safer approach to railway track assessment, addressing the limitations of traditional approaches.

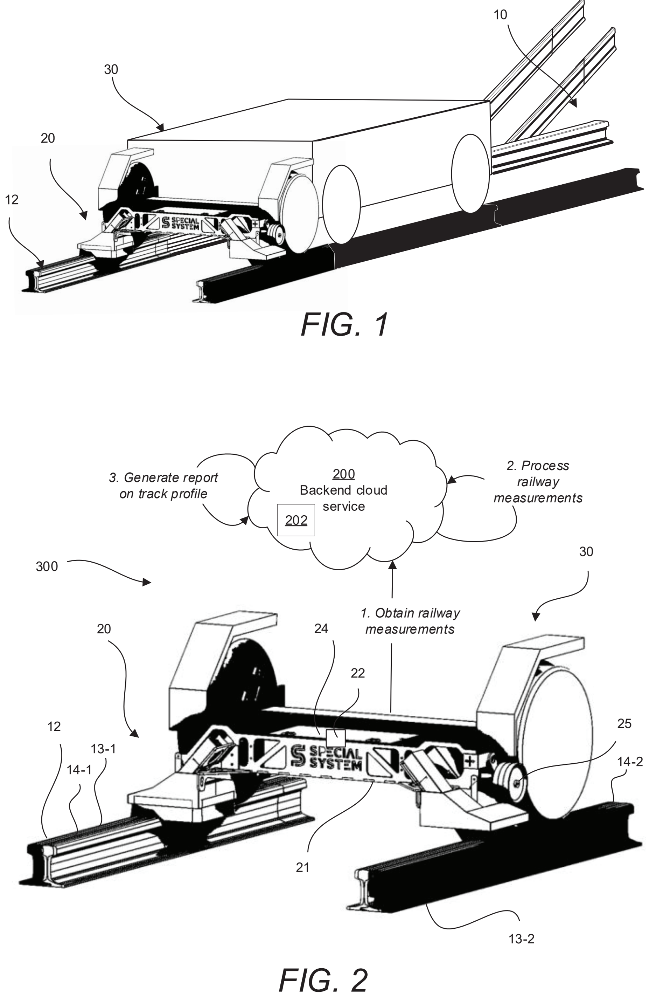

FIG. 1 illustrates an operating environment where some of the inventive aspects of the present disclosure can be applied. A railway network 10 is shown, which includes one or more track portions 12. The track portions 12 can vary in length, ranging from a few hundred meters to several kilometers, and can encompass many interconnected segments that form part of the larger railway network 10. The railway network 10 may also vary in length, covering a smaller geographical area, such as a city or a part thereof, or a larger geographical area such as an entire country's railway system.

A track-bound vehicle 30 is shown traversing a specific track portion 12. This track-bound vehicle 30 could be a variety of different types of rail-bound machinery, including but not limited to track-bound maintenance equipment, construction equipment, a track-bound wagon, a train, or similar types of rail vehicles. The depicted track-bound vehicle 30 is mechanically interfaced with a track-bound apparatus 20, which is designed to work in conjunction with the vehicle as it moves along the track portion 12. The track-bound vehicle 30 may be designed to travel at around 30km/h, although variations may apply. To this end, also the track-bound apparatus 20 travels at about the same speed since it is attached to the track-bound vehicle 30 and driven thereby.

The track-bound apparatus 20 is equipped with various sensors and data collection devices that continuously monitor the physical properties of the track portion 12 as the track-bound vehicle 30 traverses it. The collected data includes railway measurements that map the sensing locations within the railway network 10 to the specific physical characteristics of the track portion 12 at those locations. This mapping is used for generating a comprehensive track profile of the track portion 12, which can be used to identify one or more faults or areas requiring maintenance.

The track-bound apparatus 20 is typically not propelling itself, i.e., it does not include any propulsion system. Instead, the track-bound apparatus 20 is designed to be driven via motion of the track-bound vehicle 30. Having the track-bound apparatus 20 as a passive device that for example glides on the track portion 12, driven by the track-bound vehicle 30, can simplify the design and maintenance of the track-bound apparatus 20 by eliminating the need for a propulsion system, reducing the overall weight and complexity, and allowing it to focus solely on precise data collection and measurement. In some examples, however, the track-bound apparatus 20 may include a propulsion system that can assist in the drive thereof. This may be needed in challenging operational environments such as slippery tracks and/or steep inclinations. Similarly, the track-bound apparatus 20 may in some examples include a braking system that can be activated on demand where the operational context so requires.

At least one of the track-bound vehicle 30 or the track-bound apparatus 20 applies a load to the track portion 12 (i.e., being track-loaded). This load application is designed to mimic the real-world conditions of the track during normal traffic, such as when trains are traveling over it. By simulating these conditions, the railway measurements more accurate reflect how the track portions 12 respond to an actual use thereof, as they are also subjected to a load upon collection of the railway measurements.

FIG. 2 shows the track-bound apparatus 20 in more detail. The track-bound apparatus 20 is in communicative connection with a backend cloud service 200 including processing circuitry 202. The processing circuitry 202 is configured to carry out functionality described herein in relation to a method for assessing the track portion 12 in the railway network 10.

The backend cloud service 200 may be implemented using any commonly known cloud-computing platform technologies, such as e.g. Amazon Web Services, Google Cloud Platform, Microsoft Azure, DigitalOcean, Oracle Cloud Infrastructure, IBM Bluemix or Alibaba Cloud. The backend cloud service 200 may be included in a distributed cloud network that is widely and publically available, or alternatively limited to an enterprise. Alternatively, the backend cloud service 200 may in some embodiments be locally managed as e.g. a centralized server unit.

The backend cloud service 200 may include a cloud-based storage, or be in operative connection with external cloud-based storage. Connection to cloud-based storage means may be established using DBaaS (Database-as-a-service). For instance, cloud-based storage means may be deployed as a SQL data model such as MySQL, PostgreSQL or Oracle RDBMS. Alternatively, deployments based on NoSQL data models such as MongoDB, Amazon DynamoDB, Hadoop or Apache Cassandra may be used. DBaaS technologies are typically included as a service in the associated cloud-computing platform.

The backend cloud service 200 includes processing circuitry 202 configured to execute method steps discussed herein. Exemplary processing circuitry 202 includes general-purpose processors (CPUs), graphics processing units (GPUs), field-programmable gate arrays (FPGAs), application-specific integrated circuits (ASICs), tensor processing units (TPUs), and digital signal processors (DSPs). These components enable data processing, computations, and the execution of algorithms necessary for the backend cloud service 200.

The track-bound apparatus 20 comprises a plurality of sensors 22. The sensors 22 may be one or more of an encoder, laser scanner, inclinometer, IMU and GPS. Different types of sensors may be mounted to the track-bound apparatus 20 differently to capture a wide range of physical properties.

The laser scanner is typically mounted at a specific height above the track portion 12, such as on an adjustable arm or bracket that allows for precise positioning. The laser scanner emits laser beams towards the track portion 12 and measures the reflected signals to create detailed 3D profiles of the rail head and surrounding track structure. The laser scanner can be mounted at an angle to ensure that it captures the necessary field of view, covering both rail parts 13-1, 13-2 of the track portion 12 and the surrounding track bed. By continuously scanning as the track-bound vehicle 30 traverses the track portion 12, the laser scanner generates sets of railway measurements. These sets are then used by the backend cloud service 200 for identifying wear, misalignments, and other potential faults.

The IMUs, such as accelerometers, gyroscopes or magnetometers, are typically mounted on a body 21 of the track-bound apparatus 20. The IMUs measure vibrations and accelerations, angular velocity and orientation, and magnetic fields, providing data on the dynamic behavior of the track portion 12 under load. This information helps in identifying issues such as loose fastenings or structural weaknesses.

The encoders may be mounted on moving parts of the track-bound apparatus 20 that interact with the track portion 12, such as wheels or axles. The encoders measure the rotational position or speed of these components, providing data on the distance traveled and the location of the track-bound apparatus 20 in the railway network 10. For example, wheel-mounted encoders continuously monitor the rotation of the wheels as the track-bound vehicle 30 traverses the track portion 12.

Inclinometers may be mounted on the body 21 of the track-bound apparatus 20 to measure the angle of inclination or tilt relative to the horizontal plane. These sensors 22 provide data on the vertical and horizontal alignment of the track, helping to identify areas where the track portion 21 may be misaligned or uneven. Inclinometers can be mounted at multiple points on the track-bound apparatus 20 to capture tilt data from different perspectives.

GPS sensors (or alternatively GLONASS/GNSS, or other satnav units) may be mounted on the track-bound apparatus 20 to provide geolocation data. This data is then used by the backend cloud service 200 to enable a mapping between a sensing location in the railway network 10 and other railway measurements of the track portion 12 sensed by the sensors 22 at the sensing location. Hence, the GPS data captured provided by the GPS sensors is used to correlate the physical measurements captured by other sensors 22 with specific geographic locations on the railway network 10.

The sensors 22 are designed to continuously collect data at predefined intervals, ensuring a consistent and detailed dataset that reflects the real-time condition of the track. The data from these sensors can then be transmitted to an optional intermittent unit being a data collection device 24 comprised in the track-bound apparatus 20. The data is temporarily stored by the data collection device 24 before being sent to the backend cloud service 200 for further processing and analysis.

The sensors 22 are typically arranged within a housing of the data collection device 24 or in other communicative connection with the data collection device 24. This arrangement may protect the sensors 22 and facilitate efficient data collection. The sensors 22 are typically positioned at, or at least in the vicinity of, the center of rotation of the axis of the track-bound apparatus 20. This central positioning may reduce the effects of rotational movements and vibrations, ensuring more accurate and stable measurements of the track portion 12.

The data collection device 24 acts as the central hub for all incoming data from the sensors 22, assisting in recording, synchronizing and temporarily storing data before it is transmitted for further analysis. The data collection device 24 may receive the railway measurements in real-time, and use data processing algorithms to organize and format the data into cohesive sets. These sets include detailed mappings between specific sensing locations on the railway network (e.g. from GPS data) and the corresponding physical measurements taken by the sensors. The data collection device 24 is designed to handle the data such that no information is lost or corrupted during the collection process. The data collection device 24 is configured to operate in conjunction with a communication interface that enable it to transmit the collected data to the backend cloud service 200 once the data collection phase is complete.

The connection between the sensors 22 and the data collection device 24 is typically wired, although wireless solutions can be envisaged. The connection between the data collection device 24 and the backend cloud service 200 is wireless, and can for example be based on any long-range communication standard known in the art, such as W-CDMA/HSPA, GSM, UTRAN, LTE or Starlink.

In addition to its primary function of data aggregation and storage, the data collection device 24 may also perform preliminary data processing tasks. This includes filtering out noise, correcting for minor discrepancies, and ensuring that the data is in a suitable format for further analysis by the backend cloud service 200. By performing these initial processing steps, the data collection device 24 can help streamlining the subsequent analysis phase, which may make the overall assessment process more efficient.

A mechanical interface 25 comprised in the track-bound apparatus 20 is a component that facilitates the coupling and interaction between the track-bound apparatus 20 and the track-bound vehicle 30. The mechanical interface 25 is designed to ensure that the track-bound apparatus 20 remains securely attached to the track-bound vehicle 30 as it navigates the track portion 12, providing stability and enabling precise data collection.

Exemplary types of mechanical interfaces known in the art that can enable quick and removable coupling may include one or more of quick-release couplings (such as cam-lock or quick-disconnect fittings), snap-fit connectors, bayonet mounts, magnetic couplings, latch mechanisms, clamping systems (such as toggle or hand-tightened clamps), threaded quick-release nuts and pin and cotter systems. The features and variants of the mechanical interface 25 typically depend on characteristics of the track-bound vehicle 30 to which the track-bound apparatus 20 is designed to mount.

Constructed from durable materials, such as stainless steel, aluminum, high-strength alloys, composite materials, or the like, the mechanical interface 25 is engineered to withstand the dynamic forces and vibrations encountered during the traversal of the track portion 12. It can provide a robust and stable connection, which may be important for maintaining the alignment and positioning of the sensors 22 and the data collection device 24. This stability can ensure that the data captured is accurate and consistent, reflecting the true condition of the track portion 12 being traversed.

The mechanical interface 25 is designed to be adaptable, allowing it to be mounted on various types of track-bound vehicles, such as maintenance equipment, construction equipment, track-bound wagons, and trains. This versatility means that the track-bound apparatus 20 can be deployed in different operational scenarios, enhancing its utility across a wide range of railway assessment tasks.

As used in the present disclosure, the term "railway measurement sets" is defined as collections of one or more individual railway measurements, encompassing various data points captured by the sensors 22 at specific sensing locations along the track portion 12.

The railway measurements collected by the sensors 22 on the track-bound apparatus 20 enable the calculation of track parameters such as track width, cross level, skew angle, longitudinal level, and rail alignment. The rail measurements are used for various formulas to calculate these parameters, which are then used for assessing the condition of the track portion 12 and ensuring safe and efficient railway operations.

The railway measurements may include the gauge of the track, which includes both the front and rear gauges. This measurement is the distance between the inner faces of the respective rail parts 14 of the track portion 12 and are used for determining track width. Accurate gauge measurements ensure that the track conforms to standard specifications, preventing issues such as derailments.

The railway measurements may include an angle at which the respective rail parts 14 of the track portion 12 are tilted relative to the horizontal plane. These measurements help identify any unevenness or misalignment in the track portion 12 that could affect train stability.

The railway measurements may include a height from the ground to the adjustable arm holding the sensor and the length of the arm (as discussed above in relation to the sensor 22 being a laser scanner). These measurements can help in determining the track portion's 12 vertical alignment, ensuring that there are no dips or rises that could affect train operations.

The railway measurements may include step distances between each recording of a railway measurement. This is used to provide a detailed and continuous profile of the track portion 12. The step distance can ensure that data points are collected at regular intervals, enabling a comprehensive analysis of the track's condition.

The railway measurements may include an angle at which the rail parts 13-1, 13-2 are tilted, and a height from the ground to various components of the track-bound apparatus 20. These data points can provide a picture of the track's alignment and geometry, allowing for calculations of necessary parameters.

After having obtained the railway measurements, these are processed by the processing circuitry 202 of the backend cloud service 200. The purpose of this processing is to generate a track profile of the track portion. This may involve several detailed steps aimed at generating an accurate and comprehensive track profile of the track portion.

Initially, the raw railway measurements obtained from the data collection device 25 (or directly from the sensors 22) may be cleaned and preprocessed. This step involves removing noise, correcting for any discrepancies or errors in the data, and ensuring that the measurements are consistent and reliable. Techniques such as filtering, normalization, and outlier detection may be employed to refine the dataset.

Once the data is cleaned, it can be integrated and aligned to ensure that measurements from different sensors and time points are synchronized. The processing circuitry 202 may combine data from various sensors 22 of the same or different type to create a unified dataset that accurately represents the condition of the track portion 12 at the specific sensing locations.

The processing may involves calculating several key metrics based on the railway measurements. To achieve accurate calculations, the processing may include an initial step of identifying clusters of vertical and horizontal positions of a rail head 14 of the track portion 12 at each sensing location. While this disclosure simply refers to a rail head 14, it is readily understood that the rail head 14 is present and thus considered for both track parts (left and right track parts 13-1, 13-2) of the track portion 12, i.e., rail heads 14-1, 14-2. This clustering step can be employed purposes of isolating the relevant data points that represent the rail head 14, which is typically the most critical part of the track portion 12 for assessing track conditions. The rail head 14 is the topmost part of the rail where the train wheels make contact. It is important for the structural integrity and smooth operation of the railway. Any wear, misalignment, or defects in the rail head 14 can impact the safety and performance of the railway network. A rail typically consists of three main parts being the top part (rail head 14), as described above, the vertical section connecting the rail head 14 to the rail foot referred to as the web, and the rail foot (or base), being the bottom part that rests on the rail ties (sleepers) and is secured to the track bed.

The vertical and horizontal positions refer to the coordinates that describe the location of the rail head 14 in a two-dimensional plane. Vertical positions indicate the height of the rail head 14 relative to the ground or a reference plane, while horizontal positions refer to the lateral displacement of the rail head 14 relative to the centerline of the track portion 12.

Clusters in this context are groups of data points that represent the vertical and horizontal positions of the rail head 14 at each sensing location along the track portion 12. Clustering helps in distinguishing the rail head 14 from other parts of the rail and surrounding track elements, ensuring that the measurements used for further calculations are accurate and relevant. To identify clusters of vertical and horizontal positions of the rail head, an algorithm like DBSCAN (Density-Based Spatial Clustering of Applications with Noise) can be used. DBSCAN is effective in identifying clusters based on the density of data points, making it well-suited for this application. Other exemplary methods may be envisaged as alternatives as well. The clustering is done to isolate the data points that specifically correspond to the rail head 14. This isolation is used for the following reasons. Firstly, by identifying the correct clusters, the processing can focus on relevant data points, which may ensure that calculations using railway measurements are accurate. Secondly, the clustering can help in filtering out noise and irrelevant data points that could otherwise skew the results. This can lead to more reliable and precise measurements. Thirdly, isolating clusters can ensure that the data used for calculations is consistent across different sensing locations, which may providing a uniform basis for generating the track profile.

After identifying the clusters of vertical and horizontal positions of the rail head using techniques like DBSCAN, a filtering process is carried out to extract a virtual representation of the rail head 14 based on these identified clusters. This virtual representation is then used for accurately assessing the condition of the rail and ensuring precise calculations of key metrics.

The filtering process involves refining the identified clusters to create a detailed and accurate virtual model of the rail head 14. This process may ensure that only the most relevant and accurate data points are used, filtering out noise and irrelevant information. After clustering, any outliers within the identified rail head cluster can be removed. This can be done using statistical methods such as Z-score or IQR (Interquartile Range) to identify and exclude data points that deviate from a threshold value of the cluster's mean. Techniques like moving averages or Gaussian smoothing can be applied to the cluster data to reduce noise and create a smoother representation of the rail head. A polynomial curve fitting technique can be used to create a continuous and smooth curve that represents the rail head 14. This involves fitting a polynomial equation to the cluster data points, which minimizes the error between the actual data points and the fitted curve. Spline interpolation can be used to generate a piecewise smooth curve that passes through the cluster data points. This technique can ensure a relatively higher degree of accuracy and smoothness in the virtual representation. The refined cluster data can be used to generate a 3D point cloud. This point cloud may represent the spatial distribution of the rail head 14 in three dimensions, providing a detailed virtual model. Finally, techniques like Delaunay triangulation or Poisson surface reconstruction can be applied to the point cloud to create a continuous surface model of the rail head 14. The outcome of the filtering process is a virtual representation of the rail head 14 that is, preferably, accurate, smooth, and free from noise.

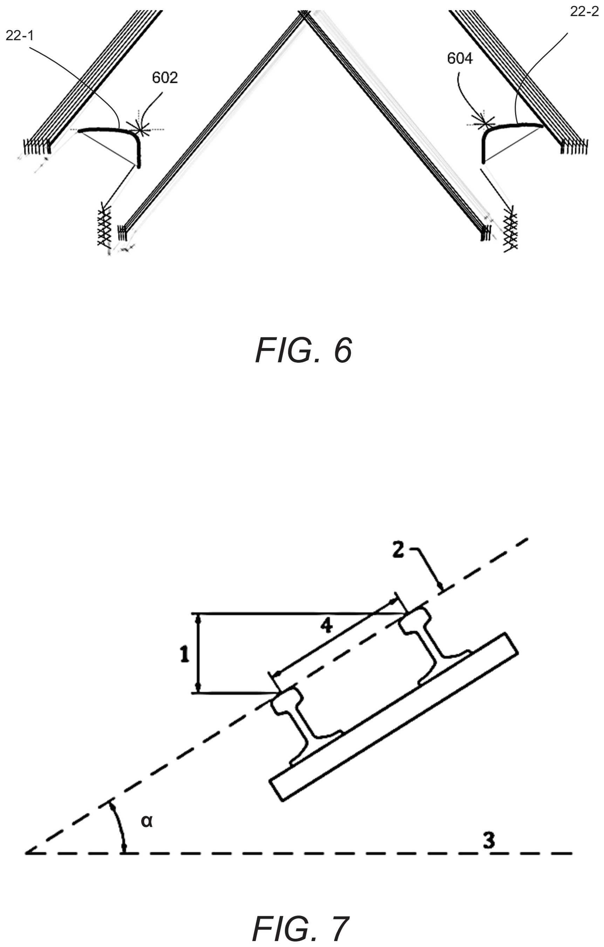

Based on the virtual representation of the rail head 14, a plurality of calculations can be made. These will be discussed in more detail later on with further reference to FIGs. 6-9.

Once the track profile is generated, the processing circuitry 202 is further configured to produce a report that details the condition of the track portion 12. This report is a comprehensive document that highlights the presence of any track faults identified during the analysis.

Track faults can encompass a variety of issues affecting the railway's integrity and performance, for example misalignments, uneven cross levels, gauge discrepancies, skew angles, and vertical or horizontal deviations. These faults are critical to identify as they can lead to unsafe conditions, increased wear on rolling stock, and potential derailments if left unaddressed.

The report generated by the processing circuitry 202 serves multiple purposes. It provides a visual and quantitative representation of the track profile, including measurements of track geometry and alignment. The report can include graphs, charts, and tables that depict the vertical and horizontal alignment, track gauge, cross levels, and other metrics. The report may be designed to be user-friendly, enabling railway engineers, maintenance personnel, and decision-makers to quickly understand the condition of the track portion 12 under analysis and prioritize maintenance activities. By providing a clear and detailed overview of the track's health, the report ensures that maintenance resources are effectively allocated, enhancing the overall safety and reliability of the railway network 10.

The report includes a section dedicated to the track faults, where each identified issue is accompanied with additional metadata. The metadata may outline the nature of the fault, its location along the track portion 12, and its severity. Recommendations for corrective actions may also be provided, guiding maintenance teams on the necessary steps to rectify the identified issues. The metadata may also include a maintenance prioritization indicator for one or more of the track faults present along the track portion 12. This will highlight and sort out track faults in accordance with the severity thereof, and how prioritized they should be in relation to other track faults in terms of where maintenance is due.

In some examples, the presence of one or more track faults can be conditioned by one or more discrepancies between a track profile and a reference profile. The reference profile comprises nominal baseline values of railway measurements of the track portion 12 at reference location corresponding to the sensing locations where the sensors 22 sensed the railway measurements of the track portion 12. Hence, they can be directly comparable. To this end, the generation of the report may involve a comparison between the track profile and the reference profile to determine the track faults.

The reference profile serves as a standard or ideal set of measurements that represent the expected condition of the track under normal, fault-free circumstances. This profile can be obtained through an API to an external service that maintains historical data or industry-standard measurements for railway tracks. The nominal baseline values in the reference profile may include metrics similar to those provided by the railway measurements. These baseline values may be established based on historical data, engineering standards, and previous assessments of tracks in similar conditions. The reference locations are specific points along the track portion 12 where measurements are taken. These locations may be chosen to provide a comprehensive assessment of the condition of the track portion 12, covering areas that may be prone to faults or wear. By ensuring that the sensing locations and reference locations correspond, the comparison between the actual measurements and the baseline values is accurate and meaningful.

To generate the track profile, the processing circuitry 202 first compiles the railway measurements taken by the sensors 22. This profile is then compared to the reference profile by analyzing the discrepancies between the actual measurements and the nominal baseline values. The presence of one or more track faults may be determined by identifying discrepancies that exceed predetermined threshold limits. Both raw sensor data, as well as analyzed railway measurements, can be compared. Discrepancies can take various forms, such as deviations in track gauge, misalignments in vertical or horizontal positions, and variations in cross levels. For instance, if the nominal baseline value for the track gauge at a particular reference location is 1435 mm, but the actual measurement shows a gauge of 1445 mm, this 10 mm deviation might exceed the allowable threshold, indicating a potential track fault.

In another example, suppose the reference profile indicating that the vertical alignment at a specific reference location should be 0 mm (perfectly level), with an allowable deviation of $\pm 2$ mm. If the actual measurement shows a vertical displacement of +5 mm, this exceeds the threshold and is flagged as a track fault. Such a discrepancy suggests that this section of the track portion 12 is elevated more than acceptable limits, which could lead to safety issues if not addressed.

The comparison may involve employing algorithms that calculate the difference between the actual measurements and the baseline values. These algorithms check if the discrepancies fall within the acceptable range or exceed the predetermined threshold limits discussed above. When discrepancies are detected, the processing circuitry 202 flags these as potential faults and includes them in the final report. Exemplary algorithms that can be employed include root mean square error, mean absolute error, Z-score, weighted scoring, statistical process control techniques, or other difference calculation methods known in the art.

The report may comprise a maintenance prioritization indicator for track faults present along the track portion 12. These can be determined based on the identified discrepancies discussed above. The maintenance prioritization indicator may aid in the efficient allocation of maintenance resources, ensuring that the most urgent and impactful track faults are addressed first. The maintenance prioritization indicator can be defined as a quantified metric or ranking system that assesses the severity and urgency of each identified track fault. The maintenance prioritization indicator can take into account several factors, including the magnitude of the discrepancy between the track profile and the reference profile, the location of the fault, the potential impact on train operations, and historical data on track conditions and failures.

To generate the maintenance prioritization indicator, the processing circuitry 202 may evaluate each track fault based on predefined criteria. These criteria can include a severity of the discrepancy. The magnitude of the deviation from the nominal baseline values in the reference profile. Larger discrepancies typically indicate more severe faults that require immediate attention. The criteria may also include a location criticality, which refers to the importance of the fault's location within the railway network 10. Faults located on high-traffic routes, near critical infrastructure, or in areas with a history of frequent issues may be prioritized higher. The criteria may also include an impact on operations, which refers to the potential effect of the fault on train operations, including safety risks, speed restrictions, and the likelihood of causing service interruptions or delays. The criteria may also include historical data, taking into account one or more analyses of past maintenance records and track performance data to identify patterns and predict the urgency of the fault. For example, a fault in an area with a history of frequent maintenance issues may be prioritized higher.

The maintenance prioritization indicator can be calculated using an algorithm that combines these factors into a single, coherent metric. This metric can be represented as a numerical score, a ranking, or a categorical label (e.g., high, medium, low priority). The algorithm may employ techniques such as weighted scoring, machine learning models, or decision trees to accurately assess and rank the faults. Once calculated, the maintenance prioritization indicator is included in the report, providing a clear and actionable guide for maintenance teams. The report not only lists the identified faults but also ranks them based on their prioritization indicators, allowing maintenance managers to allocate resources effectively and address the most critical issues first.

For example, consider a track fault where the track gauge is found to be 15 mm wider than the nominal baseline value, located on a high-speed rail line with a history of gauge widening issues. The severity of the discrepancy, combined with the criticality of the location and historical data, result in a high maintenance prioritization indicator. This fault would be flagged as urgent, prompting prioritized corrective action to prevent potential safety risks and operational disruptions.

Typically, larger deviations between the track profile and the reference profile indicate more severe faults in the track condition. Larger discrepancies typically pose greater risks to the safety and reliability of the railway network 10. For instance, a deviation in track gauge or vertical alignment can impact train stability and performance, increasing the likelihood of derailments, excessive wear on rolling stock, and operational disruptions. Hence, the maintenance prioritization indicator may assign higher priority to track faults with larger deviations from the reference profile. The processing circuitry evaluates each discrepancy by comparing the measured values in the track profile with the nominal baseline values in the reference profile.

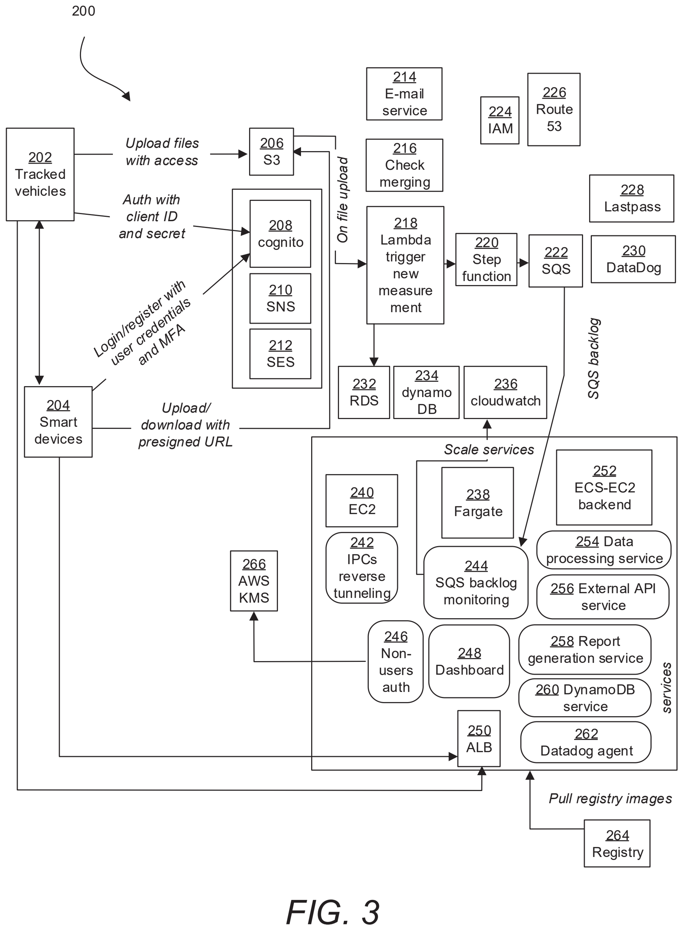

FIG. 3 illustrates an exemplary interaction chart for a backend cloud service 200, leveraging Amazon Web Services (AWS) components to manage and process data collected from a track-bound vehicle 202.

The track-bound vehicle 202 uploads files containing railway measurements to an S3 bucket 206 and authenticates its access via a client identifier and secret to AWS Cognito 208. Smart devices 204 interact with the system by logging in or registering using user credentials and multifactor authentication through Cognito 208. These smart devices 204 can also upload or download files to the S3 bucket 206 using presigned URLs, ensuring secure transactions. In this context, the smart devices 204 are internet-connected devices such as smartphones, tablets, and laptops used by field operators to securely upload, download, and interact with railway measurement data and reports, which may ensure efficient monitoring and maintenance of the railway network.

Within the AWS ecosystem, a Simple Notification Service (SNS) 210 and Simple Email Service (SES) 212 are available for communication and notification purposes. When a file is uploaded to S3 bucket 206, it triggers a Lambda function 218, which processes new railway measurements. This Lambda function 218 includes a merging functionality 216 to consolidate data and an E-mail service 214, which may utilize SES 212, to send notifications or reports based on the processed data.

A step function 220 orchestrates sequential execution of tasks, coordinating the processing workflow within the Lambda function 218. A Simple Queue Service (SQS) 222 provides a backlog mechanism, managing the queue of tasks that need to be processed by Fargate 238, which handles containerized applications. Together with CloudWatch 236, SQS 222 may ensure that the system can scale services dynamically based on demand, monitoring performance and triggering scaling actions.

IAM 224 (Identity and Access Management) manages permissions and access controls across the AWS environment, ensuring that only authorized entities can interact with the system. Route53 226 provides DNS and domain management, facilitating the routing of requests to appropriate services. LastPass 228 offers secure password management, safeguarding credentials used within the system. DataDog 230 is employed for monitoring and analytics, providing insights into the system's performance and health.

For database management, RDS 232 (Relational Database Service) handles structured data storage and queries, while DynamoDB 234 manages NoSQL data, offering flexible and scalable database solutions. CloudWatch 236 continuously monitors the system, collecting logs and metrics to ensure operational health and facilitate troubleshooting.

Further, EC2 240 provides scalable virtual computing environments, enabling the execution of various backend processes and applications. IPCs reverse tunneling service 242 facilitates secure remote access and communication between different network components. An SQS backlog monitoring service 244 continuously monitors the backlog queue managed by SQS 222, ensuring efficient task processing and load management. Non-users authentication 246 via KMS 266 (Key Management Service) offers secure key management services, enabling encrypted authentication for external entities interacting with the system. The dashboard 248 provides a user-friendly interface for monitoring system status, performance metrics, and other critical information.

An Application Load Balancer (ALB) 250 is connected to track-bound vehicles 202 and smart devices 204, distributing incoming traffic efficiently across multiple targets to ensure high availability and fault tolerance. ECS-EC2 backend 252 leverages EC2 instances to run containerized applications managed by Amazon ECS (Elastic Container Service), supporting scalable and reliable backend services.

The data processing service 254 handles the transformation, analysis, and preparation of collected railway measurements for further use. This corresponds to the functionality described above with reference to FIG. 1 involving the processing of the railway measurement sets to generate a track profile of the track portion 12. The external API service 256 facilitates communication between different system components and external applications, for example by retrieving the reference profile discussed herein, ensuring seamless data exchange and interoperability.

The report generation service 258 creates detailed reports based on processed data, providing actionable insights for railway maintenance and assessment. This corresponds to the functionality involving the generating of the report on the track profile indicating the presence of one or more track faults along the track portion 12, as discussed herein.

DynamoDB service 260 offers a scalable NoSQL database solution, supporting fast and flexible data access. The Datadog agent 262 pulls registry images from the registry service 264, enabling continuous monitoring and observability of containerized applications. This integration ensures that application performance and health metrics are consistently tracked. This is typically the same instance as the DynamoDB 234, although being scalable with the application programming interface (API) because of its inclusion within the scalable services.

In summary, the components of FIG. 3 create a comprehensive and integrated cloud infrastructure, which may enhance data processing, security, monitoring, and overall system management for efficient railway measurement and assessment. The combination of these services can provide a robust, scalable, and reliable environment that supports the various functions required for maintaining and assessing railway networks.

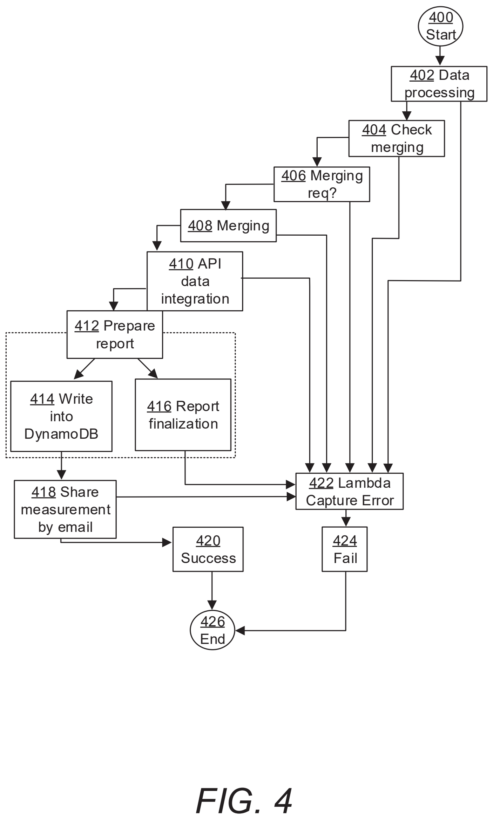

FIG. 4 provides a detailed illustration of how the step function 220 from FIG. 3 operates within the backend cloud service 200 to process railway measurement data.

The process involves begins at step 402, where data processing is performed on the collected railway measurements. This initial step involves cleaning, organizing, and preparing the data for further analysis. Following this, at step 404, the process involves checking whether data merging is necessary by evaluating specific criteria related to the collected data sets. If merging is required, as determined at step 406, the process proceeds to step 408 where the actual data merging is carried out. This step consolidates multiple data sets into a single, unified set, which may ensure consistency and completeness. Once the merging is complete, or if merging was not required, the process moves to step 410, where API integration is performed to obtain a reference profile. This reference profile serves as a baseline for comparing the processed data to expected track conditions.

At step 412, the comparing between the track profile and the reference profile is done, and the preparation of the report is initiated. This is done for purposes of being able to generate the report on the track profile indicating the presence of one or more track faults as discussed herein. The process then branches into two parallel paths: at step 414, the track profile data is written into DynamoDB for storage and further access. At step 416, the report is finalized, for example by compiling an Excel report, where data is prepared into a user-friendly format for reporting and analysis.

Following the branch at step 414, the measurements can be shared via an email service at step 418, ensuring that relevant stakeholders can receive timely updates. This step is followed by a success notification at step 420, indicating that the data processing and sharing were completed successfully, and the process then terminates at step 426.

Each of the steps 402, 404, 406, 408, 410, 416, 418 includes a lambda capture error mechanism at step 422. This mechanism captures any potential errors that occur during these steps, ensuring robust error handling. If an error is detected, the process transitions to a failure state at step 424, logging the issue and preventing further execution of the current workflow. After addressing the failure, the process proceeds to termination at step 426.

The flow of FIG. 4 may in some examples be enabled by the step function including a function-as-a-service (FaaS) to read a queue from a data storage. The data collection device 24 discussed herein can be configured to push the collected railway measurement sets to said data storage. From the data storage, the step function reads and unpackages the railway measurement sets. Hence, once the data is pushed to the data storage, the FaaS is configured to read this queue, ensuring that the data is promptly retrieved for further processing. This occurs in preparation of step 402 of FIG. 4.

Following unpackaging, the function-as-a-service performs a merging operation on the unpackaged railway measurement sets, involving steps 404, 406, 408 of FIG. 4. As discussed above, the merging step consolidates multiple data sets into a single, unified dataset. The merging process involves reconciling discrepancies and aligning data points based on predefined criteria. For instance, if there are overlapping measurements or slight variations in the data due to sensor noise, the merging process will harmonize these differences to ensure a coherent and accurate dataset. Techniques such as averaging, interpolation, or using machine learning algorithms to predict the most likely correct values can be employed to achieve this reconciliation.

Once the data has been merged into a consolidated dataset, it is stored in a persistent storage system. This can occur in between the steps 408 and 410, before the reference profile is obtained. This storage can ensure that the data is securely saved and readily accessible for subsequent processing and analysis. The persistent storage system can be a database or a cloud storage service that provides durability and reliability for the stored data.

The generation of the report is based on this merged dataset. By using a consolidated dataset that has been carefully processed to reconcile discrepancies and align data points, the report can provide a more accurate and comprehensive assessment of the track portion 12.

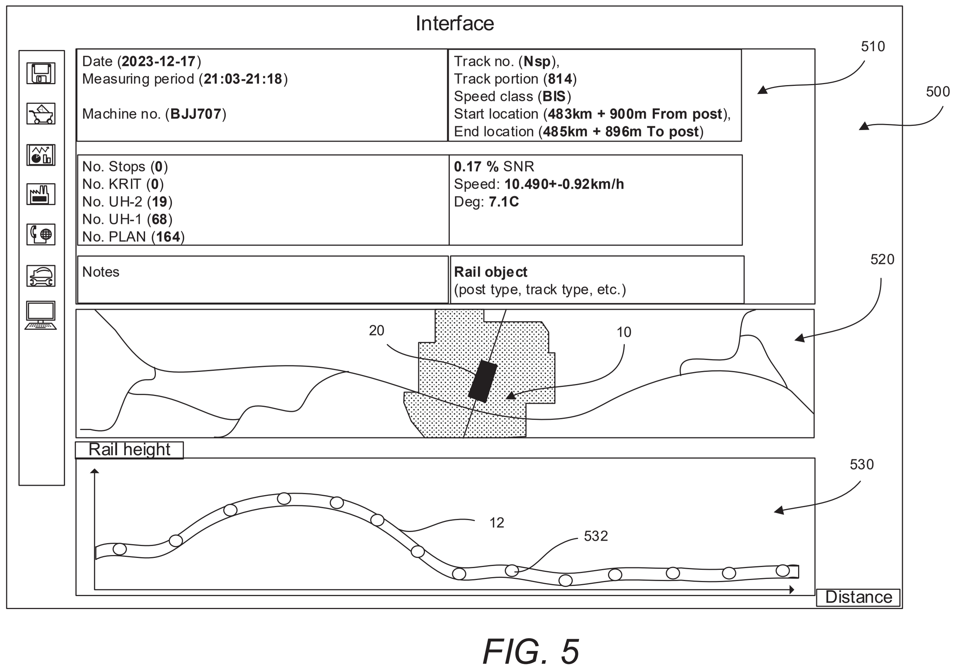

In FIG. 5, an exemplary illustration of a report 500 is shown. The report 500 can be obtained by a user once the assessment is finalized, for example via a smart device 204 (as shown and explained above with reference to FIG. 3) and presented in a graphical user interface. Note that this is just exemplary data, and other, additional or fewer data can be shown in alternative interfaces. This particular report 500 includes three sub-views, a data view 510, a map view 520 and a route view 530.

The data view 510 presents numerical and statistical information such as details surrounding the track portion 12, date, time, tracked apparatus 20 (machine) used, rail object, weather data, speed data, and travelling events. A speed class is also shown (BIS). The speed class determines a travelling speed of the track-bound vehicle 30 and a sampling rate of the sensors 22. Higher speed classes result in faster traveling speeds and increased sampling rates, ensuring that the sensors 22 collect sufficient data points for accurate track assessment even at higher velocities. Conversely, lower speed classes involve slower traveling speeds and reduced sampling rates, improving data collection for detailed analysis at lower speeds.

The map view 520 presents a geospatial overview of how the track-bound apparatus 20 travels in the railway network. The map view 520 can for example be provided by aggregating data of the analysis and route planning data from a route planner system.

The route view 530 presents a plot of an appearance of the track portion 12, in terms of rail height over a distance, with a plurality of sampling points 532. The sampling points 532 refer to where the sensors 22 have sensed railway measurements along the distance travelled by the track-bound apparatus 20.

With further reference to FIGs. 6-9, various calculations included in the processing of the railway measurement sets discussed herein are further defined. As discussed above, these may be based on the virtual representation of the rail head 14 that was extracted by way of filtering the identified clusters of vertical and horizontal positions of the rail head 14 of the track portion 12 at each sensing location. It shall therefore be understood that one or more of these calculations can be carried out at each time step, i.e., in response to the track-bound apparatus 20 moving between a plurality of different sensing locations.

In FIG. 6, calculation of the track width is shown. The figure shows a profile of the rail obtained from the railway measurements, from which horizontal and vertical planes can be obtained. The markers 602, 604 of FIG. 6 represent the vertical positions of the rail head 14. The calculation of the track width is further refined by considering a calibration distance between two specific sensors: sensor 22-1, which measures a left rail part 13-1 of the track portion 12, and sensor 22-2, which measures a right rail part 13-2 of the track portion 12. These sensors 22-1, 22-2 are typically laser scanners. The "calibration distance" in this example refers to the known, fixed distance between the two sensors 22-1, 22-2 mounted to the track-bound apparatus 20. This distance is a parameter that can ensure the accuracy of the track width calculation. By knowing the exact distance between the sensors 22-1, 22-2, the measured vertical positions of the left and right rail heads 14-1, 14-2 can be measured to a precise track width measurement.

For example, suppose the vertical positions of the rail heads are measured at multiple points along the track portion 12, and the calibration distance between the sensors is known to be 1500 mm. The calculation uses this fixed distance to align the measurements from both sensors 22 accurately. If the vertical position of the left rail head is 50 mm and the right rail head is 55 mm at a specific point, the calculation considers these positions relative to the calibration distance. Since the difference in vertical positions is 5 mm (55 - 50 mm), the calculation adjusts for this minor vertical misalignment. The final track width is calculated by considering the horizontal distance between the sensors and the vertical displacement. Using the Pythagorean theorem, the final track width would be slightly less than 1500 mm due to the vertical discrepancy. In practical terms, the vertical positions ensure that the sensors are correctly aligned, and any tilt or height difference is accounted for, leading to an accurate horizontal measurement of the track width.

In FIG. 7, an illustration of how a cross level C can be calculated is shown. The figure shows a banked curve, illustrating the elevation of the rails and the angular tilt of the track-bound vehicle 30 as it enters the curve, with the horizontal plane tilting accordingly. In the illustration, 1) refers to vertical height difference between the two rail parts 13-1, 13-2, 2) refers to a rail head position, 3) to the horizontal plane, and 4) to the gauge. Generally, the calculation may be done based on the following formula:

$$C = sin(a) * G,$$

where $\alpha$ represents an angle at which respective rail parts 14 of the track portion 12 are tilted relative to the horizontal plane, and G represents the gauge of the track portion 12 being the distance between inner faces of the respective rails 14.

Proper cross level calculation may help in maintaining appropriate banking on curves, which is important for counterbalancing the forces experienced by trains traveling at high speeds. Any deviation in cross level can lead to uneven wear, increased risk of derailments, and discomfort for passengers. This calculation is thus used for maintaining the stability and safety of the railway track, especially on curves where proper banking is necessary to counteract centrifugal forces. The angle $\alpha$ is determined by assessing the vertical positions of the rail heads in the virtual representation. This angle represents the tilt or inclination of the track relative to a horizontal plane. It is calculated by comparing the heights of the left and right rail heads. For example, if one rail head is higher than the other, the track is tilted, and this tilt is quantified as the angle $\alpha$. The gauge G is the horizontal distance between the inner faces of the left and right rails. This is a fixed measurement that defines the standard width of the track. For standard gauge railways, this distance is typically 1435 mm, but it may vary for different track types. Using the angle $\alpha$ and the gauge G the cross level is calculated with the formula defined above This calculation provides the vertical displacement between the two rails due to the tilt.

In an exemplary calculation, suppose the virtual representation of the rail head shows that the left rail head is at a height of 50 mm and the right rail head is at a height of 70 mm, creating a tilt. The angle $\alpha$ can be calculated using trigonometric functions based on the height difference and the horizontal distance G. If the angle $\alpha$ sensed by the sensors 22 is 2 degrees (converted to radians for the sine function), and the gauge G is 1435 mm, the cross level C is calculated as follows:

$$\alpha\,(rad) = 2° * \frac{\pi}{180°} \approx 0.0349\,rad$$

$$C = sin(0.0349) * 1435 \approx 50mm$$

This result indicates a vertical displacement (cross level C) of 50 mm between the two rails due to the tilt.

Based on the cross level, a skew angle can be calculated. The skew angle is a metric that provides insight into the twisting or torsional deformation of the track portion 12. The skew angle can be derived as a derivative of the cross level C, offering a measure of how the cross level changes along the track portion's 12 length. This is particularly important for detecting areas of the track that may be experiencing torsional stress, which could lead to structural issues or affect the stability of passing trains.

The skew angle $\theta$ is defined as the rate of change of the cross level C with respect to the longitudinal distance x along the track. Mathematically, it can be expressed as:

$$\theta = \frac{dC}{dX}$$

In an example, suppose cross level measurements C at several points x along a longitudinal distance the track portion 12. These are denoted and exemplified as $C_1$, $C_2$, $C_3$ and $x_1$, $x_2$, $x_3$, where $C_1$ is 50 mm, $C_2$ is 52 mm, $C_3$ is 55 mm, $x_1$ is 0 m, $x_2$ is 10 m, and $x_3$ is 20 m. The rate of change between these points are accordingly calculated as 0.2 mm/m between $x_1$ and $x_2$, and as 0.3 mm/m between $x_2$ and $x_3$. This formula can be generalized for any two consecutive points $x_i$ and $x_{i+1}$ as:

$$\theta_{i,i+1} = \frac{C_{i+1} - C_i}{x_{i+1} - x_i}$$

The skew angle values 0.2 mm/m and 0.3 mm/m indicate the rate at which the cross level $C$ is changing along the track portion 12. This suggests a slight increase in the tilt or torsion of the track portion 12 between points $x_1$ and $x_3$. This rate of change, or skew angle $\theta$, provides understanding of the behaviour of the track portion 12. A higher skew angle indicates more significant twisting or torsion in the track portion 12, which may suggest areas of concern for maintenance or safety. A lower skew angle, on the other hand, typically indicates a more stable and uniform track portion 12.

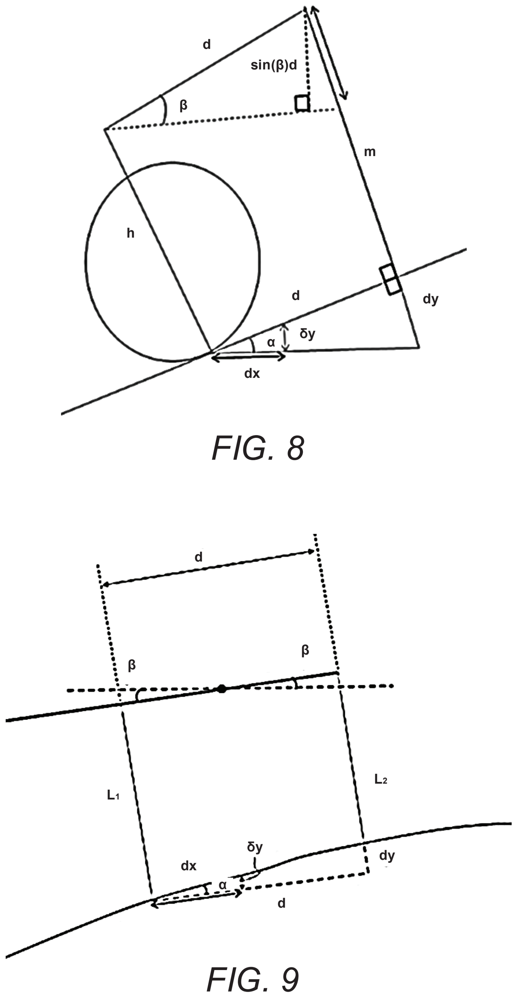

In FIG. 8, a calculation of a longitudinal level $L$ is shown. The figure shows the adjustments made to compensate for different wheelbases, where the dynamics of the body change and the vertical position reflects bumps in the rails, with samples read and integrated over time. The longitudinal level provides a detailed profile of the track portion's 12 elevation changes along its length, which is used for ensuring smooth and stable train operations. The calculation is performed using a series of mathematical equations that take into account various measurements and parameters obtained from the sensors 22, according to the below formulas:

$$dy = h + \sin(\beta)d - m,$$

$$\alpha = \tan^{-1}(\frac{(h + \sin(\beta)d) - m}{d}),$$

$$\delta y = dx \sin(\alpha),$$

$$longitudinal\ level = \int \delta y dx,$$

where $h$ is the height from the ground to an arm holding a sensor 22. This height is a fixed measurement that provides a reference point for calculating the vertical position of the rail head 14. The step or distance $dx$ between each railway measurement determines the resolution of the measurements along the track. The angle $\beta$ of the body 21 of the track-bound apparatus 20 in relation to the longitudinal direction of the respective rail parts 14 of the track portion 12 indicates the tilt or inclination of the track-bound apparatus 20 as it moves along the track portion 12. The railway measurement $m$ is obtained by the sensor 22, and represents the distance from the sensor to the rail head 14, providing the vertical position of the rail head 14.

In an example, suppose the height $h$ from the ground to the arm holding the sensor is 1000 mm, the length of the arm $d$ is 500 mm, the step size $dx$ between measurements is 1 meter, and the angle $\beta$ of the apparatus body 21 is 5 degrees. The sensor measurement $m$ at a specific point where the longitudinal level $L$ is to be calculated is 1050 mm. Based on these values, the vertical displacement $dy$ is calculated as -6.4 mm, the angle of displacement $\alpha$ as -0.0128 rads, and the incremental vertical change $\delta y$ as -0.0128 mm. The longitudinal level $L$ is then obtained by integrating the incremental vertical change $\delta y$ over the track length. This provides a profile of the elevation changes along the track portion 12. For example, if each 1 meter is considered as a horizontal segment, the cumulative change over a distance can be found by summing $\delta y$ values as:

$$Y(x) = \sum_{i=1}^{x} (-0.0128) \approx -0.0128 * x\ m$$

In FIG. 9, a calculation of a rail alignment $R$ is shown. FIG. 9 shows the same principle as FIG. 8 but with two sensors (A and B, left and right) to measure the instantaneous skew between the sensors. Rail alignment is a metric that provides insight into the horizontal deviations and alignment of the track portion 12, which are used for maintaining the smooth and stable operation of tracked vehicles. The calculation is performed using a series of mathematical equations that take into account various measurements and parameters obtained from the sensors 22, according to the below formulas:

$$dy = L_1 + \sin(\beta)d/2 - (L_2 + \sin(\beta)d/2),$$

$$\alpha = \tan^{-1}(\frac{dy}{d}),$$

$$\delta y = \alpha\ dx,$$

$$R = \int \delta y\ dx,$$

where $d$ is a length of an arm holding a sensor 22 used for determining the sensor's 22 position relative to the track portion 12, $dx$ is the step or distance between each railway measurement that determines the resolution of the measurements along the track portion 12, $\beta$ is the angle of the body 21 of the track-bound apparatus 20 in relation to the longitudinal direction of the respective rails 14 of the track portion 12. This angle $\beta$ indicates the tilt or inclination of the apparatus as it moves along the track. The parameters $L_1, L_2$ represent vertical position of a first scanner 22-1 located closest to a loaded measurement axle, and the vertical position of a second scanner 22-2 at the other (furthest away from) measurement axle, respectively.

In an example, suppose the length $d$ of the arm holding the sensor is 500 mm, the step size $dx$ between measurements is 1 meter, and the angle $\beta$ of the apparatus body is 5 degrees. The vertical positions $L_1$, $L_2$ are 50 mm and 55 mm, respectively. Based on these values, the vertical displacement $dy$ is calculated as approximately -5 mm, the angle of displacement $\alpha$ as approximately -0.01 rads, and the incremental horizontal change $\delta y$ as approximately -10 mm. Similar to the calculation of the longitudinal level $L$ according to the above, the rail alignment $R$ is then obtained by integrating the incremental vertical change $\delta y$ over the track length.

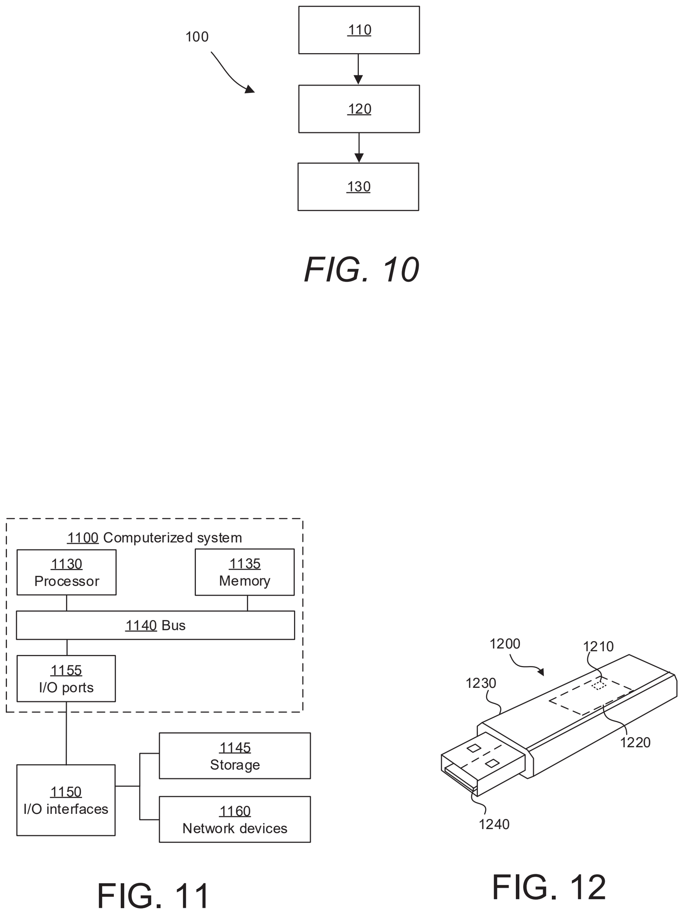

FIG. 10 shows an exemplary method 100 implemented by a backend cloud service 200 for assessing a track portion 12 in a railway network 10. The method 100 comprises obtaining 110 a plurality of railway measurement sets from a track-bound apparatus 20. The track-bound apparatus 20 comprises a plurality of sensors 22 and a mechanical interface 25 to a track-bound vehicle 30 adapted to traverse the track portion 12. Each railway measurement set comprises a mapping between a sensing location in the railway network 10 and railway measurements of the track portion 12 sensed by the sensors 22 at said sensing location during a traversal by the track-bound vehicle 30. The method 100 further comprises processing 120 the railway measurement sets to generate a track profile of the track portion 12. The method 100 further comprising generating 130 a report on the track profile indicating the presence of one or more track faults along the track portion 12.

FIG. 11 shows an exemplary computerized system 1100. The system 1100 may include a number of units known to the skilled person for implementing the functionalities as described in the present disclosure. The system 1100 may comprise one or more computing units capable of including firmware, hardware, and/or executing software instructions to implement the functionality described herein. The system 1100 may comprise one or more processor devices 1130 (herein also referred to as the controller 300), one or more memories 1135, and one or more buses 1140. The system 1100 may include at least one computing device having the processor device 1130, such as the electronic device 30. A system bus 1140 may provide an interface (herein also referred to as the interface 20) for system components including, but not limited to, the memories 1135 and the processor devices 1130. The processor device 1130 may include any number of hardware components for conducting data or signal processing or for executing computer code stored in the memories. The processor device 1130 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device 1130 may further include computer executable code that controls operation of the programmable device.

The system bus 1140 may be any of several types of bus structures that may further interconnect to a memory bus (with or without a memory controller), a peripheral bus, and/or a local bus using any of a variety of bus architectures. The memories 1135 may be one or more devices for storing data and/or computer code for completing or facilitating methods described herein. The memories 1135 may include database components, object code components, script components, or other types of information structure for supporting the various activities herein. Any distributed or local memory device may be utilized with the systems and methods of this description. The memories 1135 may be communicably connected to the processor device 1130 (e.g.,, via a circuit or any other wired, wireless, or network connection) and may include computer code for executing one or more processes described herein. The memories may include non-volatile memories (e.g.,, read-only memory (ROM), erasable programmable read-only memories (EPROM), electrically erasable programmable read-only memories (EEPROM), etc.), and volatile memories (e.g.,, random-access memory (RAM)), or any other medium which can be used to carry or store desired program code in the form of machine-executable instructions or data structures and which can be accessed by a computer or other machine with a processor device. A basic input/output system (BIOS) may be stored in the non-volatile memories and can include the basic routines that help to transfer information between elements within the computer system.

A storage 1145 (herein also referred to as storage 220) may be operably connected to the system 1100 via, for example, I/O interfaces (e.g.,, card, device) 1150 and I/O ports 1155. The storage 1145 can include, but is not limited to, devices like a magnetic disk drive, a solid state drive, an optical drive, a flash memory card, a memory stick, etc. The storage 1145 may also include a cloud server (herein referred to as cloud server 210) implemented using any commonly known cloud-computing platform, as described above. The storage 1145 or memory 1135 can store an operating system that controls and allocates resources of the system 1100.

The system 1100 may interact with network devices 1160 via the I/O interfaces 1150, or the I/O ports 1155. Through the network devices 1160, the system 1100 may interact with a network. Through the network, the system 1100 may be logically connected to remote computers. Through the network, the server-side platform 210 may communicate with the client-side platform 220, as described above. The networks with which the system 1100 may interact include, but are not limited to, a local area network (LAN), a wide area network (WAN), and other networks.

The system 1100 can be included in or form part of the railway assessment system 300. For example, the system 1100 may be a part of or be in operative communication with the backend cloud service 200.

With reference to FIG. 12, a schematic illustration of a (non-transitory) computer-readable (storage) medium 1200 is shown according to one exemplary embodiment. The computer-readable medium 1200 may be associated with or connected to the system 1100 as described herein, and is capable of storing a computer program product 1210. The computer-readable medium 1200 in the disclosed embodiment is a memory stick, such as a Universal Serial Bus (USB) stick. The USB stick 1200 comprises a housing 1230 having an interface, such as a connector 1240, and a memory chip 1220. In the disclosed embodiment, the memory chip 1220 is a flash memory, i.e.,, a non-volatile data storage that can be electrically erased and reprogrammed. The memory chip 1220 stores the computer program product 1210 which is programmed with computer program code (instructions) that when loaded into a processor device, will perform a method, for instance the method 100 explained with reference to FIG. 10. The USB stick 1200 is arranged to be connected to and read by a reading device for loading the instructions into the processor device. It should be noted that a computer-readable medium can also be other mediums such as compact discs, digital video discs, hard drives or other memory technologies commonly used. The computer program code (instructions) can also be downloaded from the computer-readable medium via a wireless interface to be loaded into the processing device.

The invention has mainly been described above with reference to a few embodiments. However, as is readily appreciated by a person skilled in the art, other embodiments than the ones disclosed above are equally possible within the scope of the invention, as defined by the appended patent claims.

**Claims**

1. A method (100) implemented by a backend cloud service (200) for assessing a track portion (12) in a railway network (10), comprising:

    obtaining (110) a plurality of railway measurement sets from a track-bound apparatus (20), the track-bound apparatus (20) comprising a plurality of sensors (22) and a mechanical interface (25) to a track-bound vehicle (30) adapted to traverse the track portion (12), wherein each railway measurement set comprises a mapping between a sensing location in the railway network (10) and railway measurements of the track portion (12) sensed by the sensors (22) at said sensing location during a traversal by the track-bound vehicle (30);

    processing (120) the railway measurement sets to generate a track profile of the track portion (12); and
    generating (130) a report on the track profile indicating the presence of one or more track faults along the track portion (12).

2. The method (100) of claim 1, further comprising obtaining (128) a reference profile comprising nominal baseline values of railway measurements of the track portion (12) at reference locations corresponding to the sensing locations where the sensors (22) sensed the railway measurements of the track portion (12),
    wherein the generating (130) comprising comparing (132) the track profile to the reference profile, wherein the presence of one or more track faults is conditioned by one or more discrepancies between the track profile and the reference profile.

3. The method (100) of claim 2, wherein the report comprises a maintenance prioritization indicator for track faults present along the track portion (12).

4. The method (100) of claim 3, wherein larger deviations between values of the track profile and values of the reference profile are prioritized higher compared to lower deviations between values of the track profile and values of the reference profile.

5. The method (100) of any preceding claim, wherein the processing (120) of the railway measurement sets comprises:

    identifying (121) from the railway measurements one or more clusters of vertical and horizontal positions of a rail head (13) of the track portion (12) at each sensing location; and
    filtering (122) the one or more identified clusters to extract a virtual representation of the rail head (13).

6. The method (100) of claim 5, further comprising, based on the virtual representation of the rail head (13), calculating (123) a track width based on the vertical positions of the rail head (13) and a calibration distance between a sensor (22-1) for a left rail part (14-1) of the track portion (12) and a sensor (22-2) for a right rail part (14-2) of the track portion (12).

7. The method (100) of any of claims 5-6, further comprising, based on the virtual representation of the rail head (13), calculating (124) a cross level C as:

$$C = \sin(\alpha) * G,$$

where $\alpha$ represents an angle at which respective rail parts (14) of the track portion (12) are tilted relative to the horizontal plane, and $G$ represents the gauge of the track portion (12) being the distance between inner faces of the respective rails (14).

8. The method (100) of claim 7, further comprising calculating (125) a skew angle of the track portion (12) as a derivative of the cross level.

9. The method (100) of any of claims 5-8, further comprising, based on the virtual representation of the rail head (13), calculating (125) a longitudinal level L as:

$$dy = h + \sin(\beta)d - m,$$

$$\alpha = \tan^{-1}(\frac{(h + \sin(\beta)d) - m}{d}),$$

$$\delta y = dx \sin(\alpha),$$

$$L = \int \delta y dx,$$

where $h$ is a height from the ground to an arm holding a sensor (22), d is the length of the arm, $dx$ is the step between each railway measurement, $\beta$ is an angle of a body (21) of the track-bound apparatus (20) in relation to the longitudinal direction of respective rail parts (14) of the track portion (12), and $m$ the railway measurement obtained by the sensor (22).

10. The method (100) of any of claims 5-9, further comprising, based on the virtual representation of the rail head (13), calculating (123) a rail alignment $R$ as:

$$dy = L_1 + \sin(\beta)d/2 - (L_2 + \sin(\beta)d/2),$$

$$\alpha = \tan^{-1}(\frac{dy}{d}),$$

$$\delta y = \alpha \, dx,$$

$$R = \int \delta y \, dx,$$

where $d$ is the length of an arm holding a sensor (22), $dx$ is the step between each railway measurement, $\beta$ is an angle of a body (21) of the track-bound apparatus (20) in relation to the longitudinal direction of respective rails (14) of the track portion (12), and $L_1$,

$L_2$ represent vertical positions of a first scanner (22-1) arranged at a first measurement axle, and of a second scanner (22-2) arranged at a second measurement axle, different from the first measurement axle, respectively, of the track-bound apparatus (20).

11. The method (100) of any preceding claim, wherein each railway measurement set further comprises a speed class of the track-bound vehicle (30), the speed class determining a travelling speed of the track-bound vehicle (30) and a sampling rate of the sensors (22).

12. The method (100) of any preceding claim, wherein the track-bound apparatus (20) further comprises a data collection device (24) serving as an intermittent device for collecting the railway measurement sets provided by the sensors (22), the obtaining (110) comprising:

  configuring (112) a function-as-a-service to read a queue from a data storage to which the data collection device (24) pushes the collected railway measurement sets; and
  unpackaging (114) the railway measurement sets read from said data storage;
  merging (116) the unpackaged railway measurement sets into a consolidated dataset using the function-as-a-service, the merging (128) involving processing of the railway measurement sets to reconcile discrepancies and align data points based on predefined criteria; and
  storing (118) the merged dataset in a persistent storage system,
  wherein the generation of the report is further based on the merged dataset.

13. A backend cloud service (200) comprising processing circuitry (202) configured to carry out the steps of the method (100) according to any one of claims 1-12.

14. A track-bound apparatus (20) comprising:

  a mechanical interface (25) to a track-bound vehicle (30) adapted to traverse a track portion (12) in a railway network (10); and
  a plurality of sensors (22) configured to sense the track portion (12) during a traversal by the track-bound vehicle (30),
  wherein the track-bound apparatus (20) is in communicative connection with the backend cloud service (200) of claim 13.

15. A railway assessment system (300) comprising the backend cloud service (200) of claim 13 and the track-bound apparatus (20) of claim 14.

FIG. 1

FIG. 2

FIG. 3

**400 Start**
↓
**402 Data processing**
↓
**404 Check merging**
↓
**406 Merging req?**
↓
**408 Merging**
↓
**410 API data integration**
↓
**412 Prepare report**
↓
**414 Write into DynamoDB**
**416 Report finalization**
↓
**418 Share measurement by email**
↓
**420 Success**
**422 Lambda Capture Error**
**424 Fail**
↓
**426 End**

# FIG. 4

## Interface

Date (**2023-12-17**)
Measuring period (**21:03-21:18**)

Machine no. (**BJJ707**)

Track no. (**Nsp**),
Track portion (**814**)
Speed class (**BIS**)
Start location (**483km + 900m From post**),
End location (**485km + 896m To post**)

No. Stops (**0**)
No. KRIT (**0**)
No. UH-2 (**19**)
No. UH-1 (**68**)
No. PLAN (**164**)

**0.17 %** SNR
Speed: **10.490+-0.92km/h**
Deg: **7.1C**

Notes

**Rail object**
(post type, track type, etc.)

Rail height

Distance

**FIG. 5**

EP 4 755 748 A1

FIG. 6

FIG. 7

FIG. 8

FIG. 9

## FIG. 10

## FIG. 11

## FIG. 12

## EUROPEAN SEARCH REPORT

**Application Number**

**EP 25 21 8940**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/039633 A1 (LI SAISHI FRANK [US]) 7 February 2019 (2019-02-07) | 1,2, 13-15 | INV. B61L15/00 B61L23/04 B61L27/53 |
| Y | * paragraphs [0004] - [0005] * * paragraph [0012] - paragraph [0052]; figures 1-5 * | 3,4 | |
| X | EP 3 138 753 A1 (RAIL VISION EUROPE LTD [GB]) 8 March 2017 (2017-03-08) * paragraph [0010] - paragraph [0068] * * paragraph [0070] - paragraph [0185]; figures 1-10 * | 1,5-15 | |
| Y | US 2014/200829 A1 (HAMPAPUR ARUN [US] ET AL) 17 July 2014 (2014-07-17) | 3,4 | |
| A | * paragraph [0022] - paragraph [0052]; figures 1-2 * | 1,2,5-15 | |

**TECHNICAL FIELDS SEARCHED (IPC)**

B61L

The present search report has been drawn up for all claims

| Place of search | Date of completion of the search | Examiner |
|---|---|---|
| Munich | 16 March 2026 | Christlen, Loic |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 8940

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2026

| Patent document cited in search report | Publication date | Patent family member(s) | Publication date |
|---|---|---|---|
| US 2019039633 A1 | 07-02-2019 | CN 109389578 A | 26-02-2019 |
| | | US 2019039633 A1 | 07-02-2019 |
| EP 3138753 A1 | 08-03-2017 | EP 3138753 A1 | 08-03-2017 |
| | | EP 3138754 A1 | 08-03-2017 |
| | | GB 2536746 A | 28-09-2016 |
| | | GB 2542115 A | 15-03-2017 |
| | | US 2017066459 A1 | 09-03-2017 |
| | | US 2017106885 A1 | 20-04-2017 |
| US 2014200829 A1 | 17-07-2014 | US 2014200827 A1 | 17-07-2014 |
| | | US 2014200828 A1 | 17-07-2014 |
| | | US 2014200829 A1 | 17-07-2014 |
| | | US 2014200830 A1 | 17-07-2014 |
| | | US 2014200869 A1 | 17-07-2014 |
| | | US 2014200870 A1 | 17-07-2014 |
| | | US 2014200872 A1 | 17-07-2014 |
| | | US 2014200873 A1 | 17-07-2014 |
| | | US 2014200951 A1 | 17-07-2014 |
| | | US 2014200952 A1 | 17-07-2014 |
| | | WO 2014110099 A2 | 17-07-2014 |

EPO FORM P0459